# EUROPEAN PATENT APPLICATION

(11) **EP 0 720 115 A2**
(43) Date of publication of application: **03.07.1996**
(21) Application number: 95309411.7
(22) Date of filing: 22.12.1995
(51) Int. Cl.: G06K 9/20, G06F 17/30

(54) **System for creating a document information database**

(30) Priority: 29.12.1994 GB 9426339
(71) Applicant: NCR International, Inc., Dayton, Ohio 45479 (US)
(72) Inventor: Anderson, Stuart, Jedburgh, Roxburghshire, TD8 6HJ (GB)
(74) Representative: Robinson, Robert George

(57) **Abstract**

In a system for producing a database of document information, sample documents (12) are scanned in a scanner (14) connected to a personal computer (16), and digital images of the scanned documents are stored. The digital images are displayed in turn as visual images (140) on the screen (142) of the computer display unit (24), and using a mouse (26), box-shaped areas (146) are produced on the screen and manipulated and sized to define zones, the locations of which are stored in a document definition file. An identification feature file may be formed by analyzing the stored digital images to determine graphical features thereof such as straight lines. The zones may be verified in a verification procedure wherein documents are again fed into the scanner (14).

## Description

This information relates a system for creating a database of document information.

With a view to reducing the burden of routine work for tellers in financial institutions, such as banks, there have recently become available self-service document processing terminals wherein customers can feed financial documents, such as cheques or giros into the terminal, and effect financial transactions, such as paying in a cheque or transferring funds to another account, without the need for the services of a teller. Such financial documents may be of many different types and contain significant information which may be handwritten or printed in any one of a wide variety of typefonts. Furthermore, as a step in processing a financial transaction it may be required to print certain information on the document.

European Patent Application No. EP-A-0 616 296 discloses a self-service financial terminal capable of processing documents of many different types, including cheques and giros having different layouts. This known terminal has stored therein a database of document information, including a document definition file and an identification feature file. The document definition file contains information identifying the location of significant zones, and the processing need for such zones (e.g. read, write, verify etc.), in respect of the various documents which can be processed by the terminal. The identification feature file contains information for identifying the various documents which can be processed by the terminal, on the basis of graphical features, such as horizontal lines, for example, contained in the documents.

It is an object of the present invention to provide an efficient method of producing a database of document information.

Therefore, according to the present invention, there is provided a method of producing a database of document information, characterized by the steps of: forming digital images of said documents, storing said digital images; producing from one of the stored digital images, a visual image of a document on a display screen of a visual display device, identifying zones of said document by manipulating zone identifying indicia on the visual image of the document displayed on said display screen and storing representations of the location of the identified zones.

One embodiment of the present invention will now be described, by way of example, with reference to the accompanying drawings, in which:-
Fig. 1 is a simplified block diagram of apparatus for forming a database of document information;
Fig. 2 is an illustration of a cheque document to be processed by the apparatus of fig. 1;
Fig. 3 is an illustration of giro document to be processed by the apparatus of Fig. 1;
Fig. 4 is a flowchart illustrating the operation of the apparatus shown in Fig. 1; and
Fig. 5 is an illustration of the display of a visual image of a document during operation of the apparatus shown in Fig. 1.

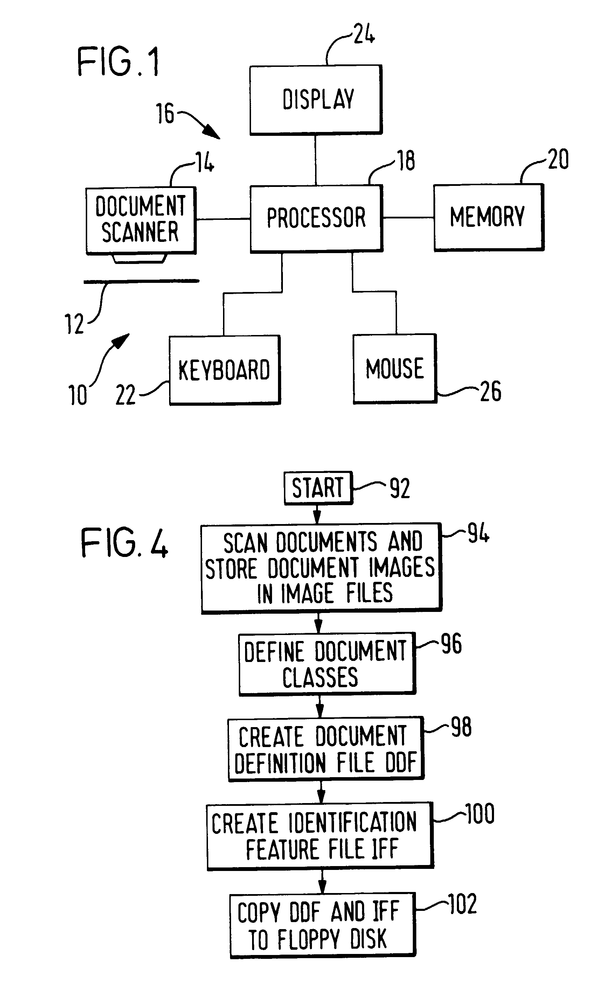

Referring first to Fig. 1, there is shown a simplified block diagram of apparatus 10 for forming a database of document information. Briefly, documents, such as a document 12 are fed to a document scanner 14 which lifts a digital image of the document 12. Preferably, the scanner 14 incorporates a printer capable of printing on documents fed to it, for use in a verification procedure to be described hereinafter. The scanner 14 is coupled to a computer 16, such as a PC (personal computer), including a processor 18, a memory 20, a keyboard 22, a visual display device (monitor) 24 and a mouse 26. Preferably, the computer 16 operates under an operating system, such as OS/2, suitable for the management of a graphical user interface (GUI) wherein windows may be manipulated on the screen of the display device 24, pull-down menus and dialog boxes are utilized to control operations, and the mouse 26 is utilized in manipulating images on the screen of the display device 24 by moving the mouse and operating a mouse button on the mouse.

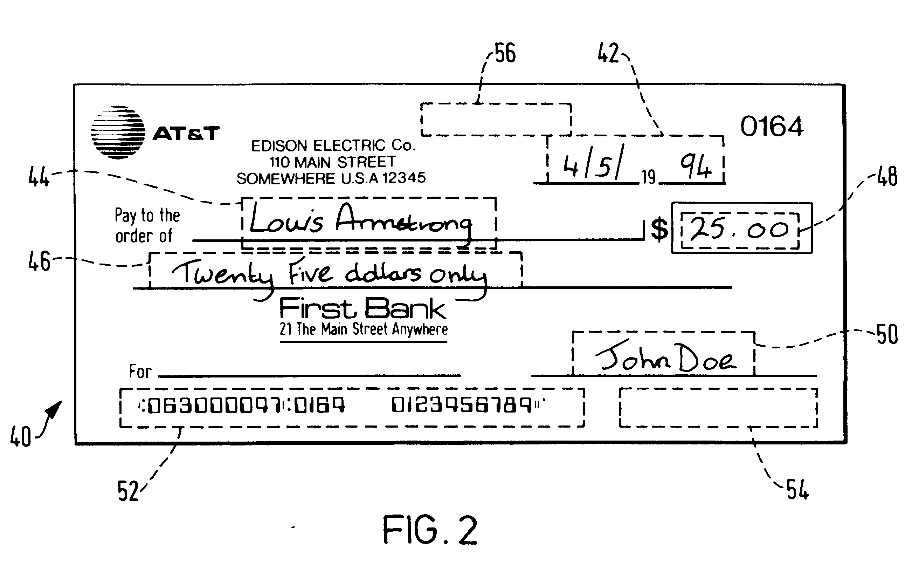

Documents which are to be processed by the apparatus shown in Fig. 1 belong to one of a plurality of document classes. A document class is a group of documents which have common processing requirements. For example, one document class may be cheques, and another document class may be giros. It will be appreciated that all cheques contain essentially the same information, but this information may have different locations on the cheques, according to the particular bank or financial institution which issues the cheque. The same applies to giros. Referring to Fig. 2, there is shown an illustration of a typical cheque 40 which may be processed by the apparatus 10 of Fig. 1. The cheque 40 contains a plurality of zones, shown by dashed outlines, which have particular significance when the cheque is processed by a self-service document processing terminal. Thus, the cheque 40 contains a date zone 42, a payee zone 44, a legal amount zone 46, a courtesy amount zone 48, a signature zone 50, a codeline zone 52, an encoded amount zone 54 for receiving an encoded amount, and an endorsement zone 56, for receiving an endorsement. As mentioned, all cheques to be processed will normally contain these zones, but the location of the zones may be different for different cheques.

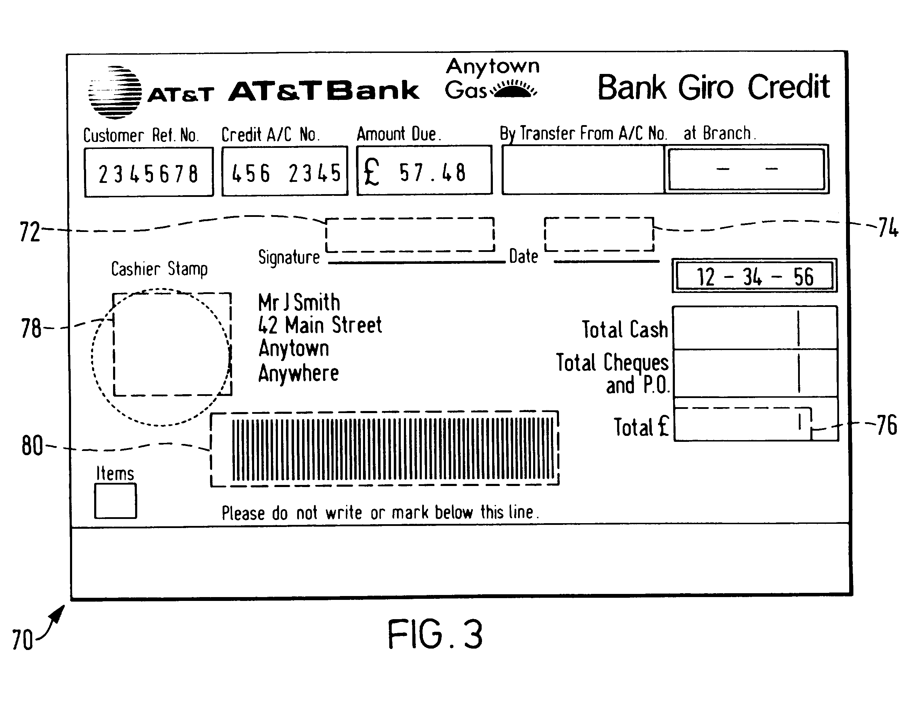

Referring now to Fig. 3, there is shown an illustration of a typical giro 70 which may be processed by the apparatus 10 of Fig. 1. The giro 70 contains a signature zone 72, a date zone 74, an amount zone 76, an endorsement zone 78 and a codeline zone 80 which contains bar coded information. All giros to be processed normally contain these zones, but the location of the zones may be different for different giros.

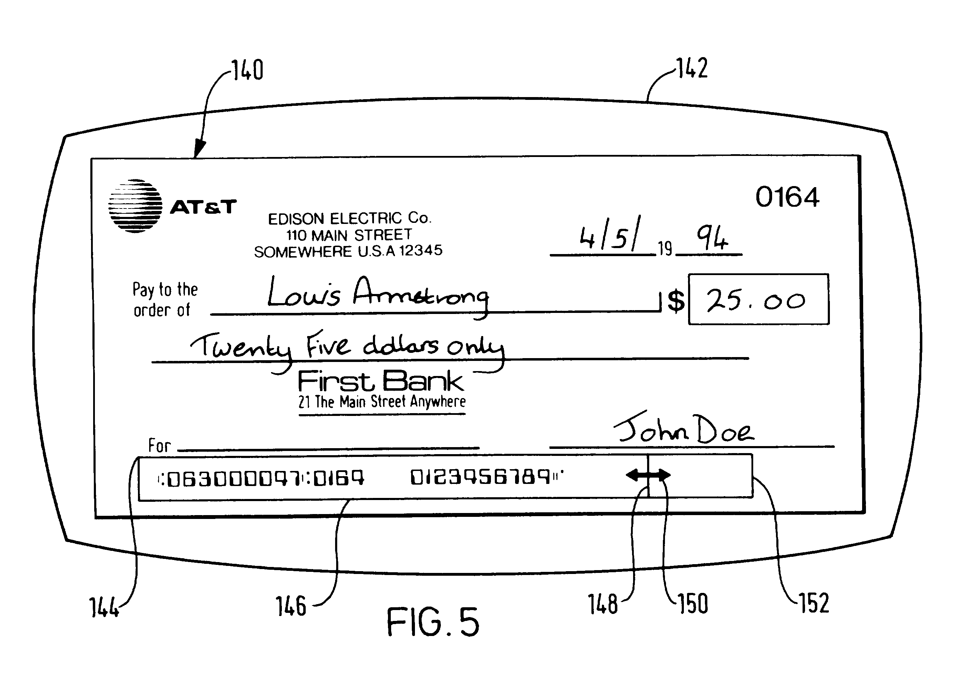

Referring now to Fig. 4, there is shown a flowchart 90 of the operation of the apparatus shown in Fig. 1. The flowchart 90 begins at start block 92 and proceeds to block 94 where it is seen that documents are scanned and their images are stored in image files. In more detail, a document such as a sample cheque 40 (Fig. 2) is fed into the scanner 14 (Fig. 1). The cheque 40 is scanned and a digital image thereof is lifted and transferred to be stored as an image file in the memory 20 of the computer 16 (Fig. 1). This procedure is repeated for all the documents for which zone location information is desired.

Next, as shown at block 96, document classes are defined, by utilizing dialog boxes on the screen of the PC display 14. Thus the document class of cheques is associated with a plurality of lists of zones, arranged by zone type, each zone being associated with a respective zone name. For example, a "read" list will contain a codeline zone, which, for the cheque 40 (Fig. 2) is the only "read" zone. A "write" list will contain the amount zone (e.g. 54 in Fig. 2) it being specified by an entry in a dialog box that encoding type printing is to take place in the self-service document processing terminal. The write list will also contain the endorse zone (56, Fig. 2), it being specified by an entry in a dialog box that text type printing is to take place therein. Similarly, the cheque class will also contain a verify list for zones for which the presence of information will be sensed (e.g. date zone 42, payee zone 44, legal amount zone 46 and signature zone 50, fig. 2) and a courtesy amount zone (48, fig. 2) for the courtesy amount which is to be compared with a keyboard-entered amount in the self-service document processing terminal.

Having created the cheque class, the giro class is created in a similar manner, by defining the giro class as containing a read zone (barcode codeline 80, Fig. 3), a write zone (endorsement zone 78) and three verify zones (signature zone 72, date zone 74 and amount zone 76). Again, a dialog box is used in this procedure.

Having defined the document classes, the flowchart 90 proceeds to block 98, where it is seen that the document definition file DDF is created. Referring now to Fig. 5, there is shown an image of a cheque 140 as it appears on the screen 142 of the PC display 24 (Fig. 1). This image is produced as follows.

First, using the mouse pointer on the screen 147, a "new" document is selected from a document menu (not shown). Using a dialog box (not shown) on the screen 142, a document name (e.g. "attelec" for the cheque 40, Fig. 2) is entered and the cheque class is selected from a list of available classes. Then, using the mouse pointer, the "attelec" image file is selected, to cause an image of the "atlelec" cheque (Fig. 2) to be displayed on the screen.

Referring again to Fig. 5 there is shown the image 140 of the cheque 40 (Fig. 2) as it appears on the screen 142. It will be appreciated that there may be dialog or other boxes appearing on the screen 142, which may partially obstruct a full view of the image 140, but such boxes can be moved around the screen in known manner by manipulating the mouse 26 (Fig. 1 ) to expose to view those portions of the image 140 which it is desired to view.

Although not shown in Fig. 5, a dialog box containing a zone list is displayed on the screen 142. For the cheque image 140, this list identifies zones which are to be selected. For example, the zone list may contain the codeline zone, the amount zone and the endorse zone. Assume that the codeline zone is selected. A further dialog box (not shown) enables a font (e.g. E13B) to be selected and an edit mask can be generated which enables only selected characters in the codeline to be selected for reading. Having made this selection, an "OK" button in the dialog box is clicked, thereby changing the mouse pointer on the screen to a small square. The small square is then moved to a point such as 144, Fig. 5, where it is desired that one corner of the codeline zone is to be. Then, by holding the left mouse button down and moving the mouse to produce diagonal movement on the screen, a box 146 is caused to appear. If the box 146 which is to form the codeline zone, is not of the correct size, it can be resized. For example, by placing the mouse pointer on one side of the zone boundary, such as the right-hand side 148, and holding down the left mouse button, a two-headed arrow 150 will appear on the screen, enabling the right-hand side boundary to be moved to the left, or to the right, such as to position 152, if this is desired. Also, the whole box may be moved by a conventional drag type mouse movement. Other boundaries of the zone may also be moved in a similar manner, if desired. When the codeline zone 146 is correctly sized, the left mouse button is released, and an indication, such as a color change and/or the addition of a special symbol, such as an asterisk, to the codeline entry in the zone list, indicates that the codeline zone has been defined. It will be appreciated that the location of the zone is determined by storing coordinates of features thereof, such as two corners, relative to a predetermined corner of the document image.

The next zone in the zone list, which may be the amount zone, is then selected. Since the amount zone has been specified, when defining the cheque class as described hereinabove, as a zone which is to receive encode type printing, a dialog box will appear on the screen 142 enabling a desired font, such as E13B, to be selected for the encoding operation. After this selection, the pointer on the screen changes to a small box as described hereinabove. This box is placed at a corner of the area where the zone is desired and, again, the mouse moved diagonally to create a box around the amount zone. As described previously, this box may be resized by moving sides thereof inwards or outwards and may be shifted, if desired. The box is adjusted in this manner to correspond with the amount zone 54 (Fig. 2). The location of this zone is again stored by storing the location of its corners relative to a predetermined corner of the document image.

It should be noted at this point that, for certain of the zones, the position and/or sizing may be in part automatic. For example, when defining the codeline zone it is possible to define a particular codeline position, by checking an "ANSI position" box in a dialog box, which will automatically restrict the codeline zone box to the standard ANSI (American National Standards Institute) position. Similarly, when defining an "encode" zone, the zone box may be caused to assume a fixed height, corresponding to the height of the selected type of encoding, e.g. E13B.

When all the desired zones have been defined, in the manner described hereinabove, a "save" command is selected by the mouse pointer on the screen 142, and the document definition for the "attelec" cheque is saved in the document definition file (DDF).

A similar procedure is followed to create the document definition for the giro 70 (Fig. 3). Briefly, a "new" document is selected from the document menu, and a document name ( e.g. "attgas" for the giro 70, (Fig. 3) is entered and the giro class is selected from the list of available classes. Then, using the mouse pointer, the "attgas" image file is selected, to cause an image of the attgas giro (Fig. 3) to appear on the screen. The relevant zones are then selected by generating and sizing a box to correspond with the desired zones, generally as described above for the cheque image 140. Finally, using the "save" command, the document definition for the "attgas" giro is saved in the document definition file (DDF).

It will be appreciated that the document definition file (DDF) includes, in respect of each document which has been processed, the document name, the document class, and in respect of each zone, the zone name, position (e.g. the coordinate positions of the top left corner and bottom right corner of the zone relative to the bottom right corner of the document image) and the zone kind (e.g. for a read zone, whether OCR/MICR data, omnifont data or bar code data is to be read, for a write zone, whether encode type printing, text type printing or logo printing is to take place). The DDF may contain additional information in respect of the document which is not pertinent to the present invention.

An identification feature file (IFF) may now optionally be created (block 100, Fig. 4). In this connection, it should be understood that during the above-described procedure for creating the document definition file (DDF) each document viewed may be selected, e.g. by clicking in an appropriate area of a dialog box, as requiring an IFF model in the IFF file to be created. This creation is effected as follows, using the mouse pointer on the screen. First, the relevant DDF is selected. Then a "make IFF" dialog box is caused to appear and an IFF name is entered. An "OK" button is then clicked, which causes all the marked documents in the DDF to be analyzed. Typically, the anlaysis identifies the position and length of horizontal lines in each document image, and stores this information as document identification data for that document. When all the marked documents in the DDF file have been analyzed, the IFF file has been created. The IFF file can be utilized to identify if a new document which is entered into the scanner 14 (Fig. 1) and has had its image lifted and stored, corresponds to a document which has previously been analyzed and had identification data stored in the IFF file. However, the primarily purpose of the IFF file is to serve to identify documents entered by customers into self-service financial document processing terminals.

Two verification procedures may be carried on a document definition file (DDF) which has been created. The first procedure is a DDF integrity check, which verifies that all zones in the class lists have been defined for each document and that the image file exists for that document. The second procedure verifies that all the defined zones have been defined correctly. This may require that the scanner 14 (Fig. 1) has a printing capability. Thus, for example, data in "read" zones is read and displayed on the PC display 24 (Fig. 1). Data in "write" zones is printed on the document and the scanner 14 produces a signal that printing has been successful. The document itself needs to be examined visually to ensure that printing has occurred at the correct location.

Returning now to Fig. 4, the final step, in block 102, is to copy the document definition file (DDF) which has been created and the associated identification feature file (IFF) onto a floppy disk. This is effected using conventional techniques for copying files to disks. The floppy disk can be used to incorporate the DDF and IFF files into control software suitable for use in self-service document processing terminals. It will be appreciated that such a terminal, in which is installed software including a DDF file and an IFF file is capable of identifying a document entered in the terminal by a customer (using the IFF file) and then, using to DDF file, to appropriately process the defined zones on the identified document.

## Claims

1. A method of producing a database of document information, characterized by the steps of: forming digital images of said documents (12), storing said digital images; producing from one of the stored digital images, a visual image (140) of a document (40) on a display screen (142) of a visual display device (24), identifying zones (52, 54 etc) of said document (40) by manipulating zone identifying indicia (146) on the visual image (140) of the document displayed on said display screen (142) and storing representations of the location of the identified zones (52,54 etc).

2. A method according to claim 1, characterized in that said step of identifying zones (52,54 etc.) of said document includes the steps of producing a box-shaped area (146) on said display screen (142) and controlling the size of the box-shaped area (146) by utilizing a mouse pointing device.

3. A method according to claim 1 or claim 2, characterized in that said step of forming digital images includes the steps of scanning a document (40) using a scanning device (14) and storing a digital representation of the scanned image.

4. A method according to any one of the preceding claims, characterized by the initial steps of defining classes for said documents (40), wherein each class contains documents having zones of the same type thereon, the locations of the zones being different for different documents of the same class.

5. A method according to claim 4, characterized in that the zone types include zones for data to be read, zones for data to be written, and zones for the presence of data to be verified.

6. A method according to any one of the preceding claims, characterized by the step of analyzing the stored digital images of said documents to determine graphical features thereof, and storing representations of the locations of said graphical features.

7. A method according to claim 6, characterized in that said graphical features include straight lines.

8. A method according to any one of the preceding claims, characterized by the step of storing the produced database of document information on a storage disk.

9. Apparatus for carrying out a method according to any one of the preceding claims, characterized by image forming means (14) adapted to form digital images of said documents (12) and computing means (18-26) coupled to said image forming means (14).

10. Apparatus according to claim 9, characterized in that said computing means (18-26) includes processing means (18), a display device (24) adapted to display visual images (140) corresponding to said stored digital images, and a mouse (26) adapted to control the manipulation of said zone identifying indicia on said display device (24)
